# EUROPÄISCHE PATENTANMELDUNG

(11) **EP 4 485 675 A1**
(43) Veröffentlichungstag der Anmeldung: **01.01.2025**
(21) Anmeldenummer: 23181925.1
(22) Anmeldetag: 27.06.2023
(51) Int. Cl.: H01M 50/533, H01M 50/538

(54) **KONTAKTBLECHTEIL UND ENERGIESPEICHERELEMENT**

(71) Anmelder: VARTA Microbattery GmbH, 73479 Ellwangen Jagst (DE)
(72) Erfinder: Frank, Waldemar, 73479 Ellwangen (DE); Geiger, Michael, 73479 Ellwangen (DE); Kieninger, Dominik, 73492 Rainau (DE)
(74) Vertreter: Ostertag & Partner Patentanwälte mbB

(57) **Zusammenfassung**

Beschrieben wird vorliegend ein Kontaktblechteil (200) für ein Energiespeicherelement und ein damit versehenes Energiespeicherelement (100). Das Kontaktblechteil umfasst einen ersten Kontaktierungsabschnitt (201) mit einer Oberseite (201a) und einer Unterseite (201b), der zur Kontaktierung mit einem ersten Bauteil eines Energiespeicherelements vorgesehen ist, und einen zweiten Kontaktierungsabschnitt (202) mit einer Oberseite (202a) und einer Unterseite (202b), der zur Kontaktierung mit einem zweiten Bauteil eines Energiespeicherelements vorgesehen ist. Zwischen dem ersten Kontaktierungsabschnitt (201) und dem zweiten Kontaktierungsabschnitt umfasst das Kontaktblechteil (200) einen Verbindungsabschnitt (203) mit einer Oberseite (203a) und einer Unterseite (203b), wobei die Oberseite (203a) des Verbindungsabschnitts (203) der Unterseite (201b) des ersten Kontaktierungsabschnitts (201) und die Unterseite (203b) der Verbindungsabschnitts (203) der Oberseite (202a) des zweiten Kontaktierungsabschnitts (202) zugewandt ist. Der erste Kontaktierungsabschnitt (201) und der Verbindungsabschnitt (203) sind über eine erste Biegezone (204), in der das Kontaktblechteil (202) entlang mindestens einer Biegelinie umgebogen ist, miteinander verbunden. Der zweite Kontaktierungsabschnitt (202) und der Verbindungsabschnitt (203) sind über eine zweite Biegezone (205), in der das Kontaktblechteil (200) entlang mindestens einer Biegelinie (205a) umgebogen ist, miteinander verbunden. Der zweite Kontaktierungsabschnitt (202) weist eine Ausnehmung (206) oder eine Durchbrechung (207) auf, welche eine Aufnahme für die erste Biegezone (204) bildet.

## Beschreibung

### ANWENDUNGSGEBIET UND STAND DER TECHNIK

Die nachstehend beschriebene Erfindung betrifft ein Kontaktblechteil und eine damit versehenes Energiespeicherelement.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, zwischen denen ein Separator angeordnet ist. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht. Der Separator verhindert somit einen unmittelbaren Kontakt der Elektroden. Gleichzeitig ermöglicht er aber einen elektrischen Ladungsausgleich zwischen den Elektroden.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein.

Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in elektrischen Werkzeugen, werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 × 70 (Durchmesser mal Höhe in mm). Zellen dieser Art umfassen stets einen Verbundkörper in Form eines Wickels. Moderne Lithium-Ionen-Zellen dieses Formfaktors können eine Energiedichte von bis zu 270 Wh/kg erreichen.

In der WO 2017/215900 A1 sind zylindrische Rundzellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle ein Kontaktblechteil auf, das auf einer Stirnseite des Wickels aufsitzt und mit einem Längsrand eines der Stromkollektoren durch Verschweißung verbunden ist. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Abhängig von der Konstruktion eines Energiespeicherelements kann es erforderlich sein, das Kontaktblechteil mit einem Teil von dessen Gehäuse zu verbinden. Dies ist beispielsweise in Fig. 1 der WO 2021/239490 A1 dargestellt, wo ein Stromleiter 107 dazu verwendet wird, eine Distanz innerhalb des Gehäuses, nämlich den Abstand zwischen einem Kontaktblechteil 105 und einem Deckel 102, zu überbrücken. Hierbei entsteht unvermeidlich ein Totvolumen, das negativ zur Energiedichte des dargestellten Energiespeicherelements beiträgt.

Aus der EP 3916891 A1 ist ein Kontaktblechteil bekannt, das in der fertigen Zelle in einer S-förmigen Faltung vorliegt und nicht nur einen Elektroden-Separator-Verbund großflächig kontaktiert, sondern gleichzeitig auch den Abstand zu einem mehrteiligen Deckel überbrückt. Durch Einsatz eines solchen Kontaktbauteils kann das erwähnte Totvolumen reduziert werden.

### AUFGABE UND LÖSUNG

Der vorliegenden Erfindung lag die Aufgabe zugrunde, Energiespeicherelemente bereitzustellen, die sich durch eine hohe Energiedichte auszeichnen. Insbesondere lag der Erfindung die Aufgabe zugrunde, Kontaktblechteile wie das in der EP 3916891 A1 erwähnte weiter zu verbessern.

Diese Aufgabe wird durch das Kontaktblechteil mit den Merkmalen des Anspruchs 1 gelöst. Auch das Energiespeicherelement mit den Merkmalen des Anspruchs 9 ist Gegenstand der Erfindung. Bevorzugte Ausführungsformen der Erfindung finden sich in den abhängigen Ansprüchen 2 bis 8 und 10 bis 13.

Das Kontaktblechteil ist zur Verwendung in einem Energiespeicherelement, welches einen Elektroden-Separator-Verbund in einem Gehäuse umfasst, vorgesehen. Es dient zur elektrischen Kontaktierung einer Elektrode des Elektroden-Separator-Verbunds und soll diese mit einem metallischen Teil des Gehäuses oder einem durch das Gehäuse geführten elektrischen Pol verbinden. Das Kontaktblechteil weist stets die folgenden Merkmale a. bis e. auf:
a. Es umfasst einen ersten Kontaktierungsabschnitt mit einer Oberseite und einer Unterseite, der zur Kontaktierung mit einem ersten Bauteil eines Energiespeicherelements vorgesehen ist.
b. Es umfasst einen zweiten Kontaktierungsabschnitt mit einer Oberseite und einer Unterseite, der zur Kontaktierung mit einem zweiten Bauteil eines Energiespeicherelements vorgesehen ist.
c. Es umfasst zwischen dem ersten Kontaktierungsabschnitt und dem zweiten Kontaktierungsabschnitt einen Verbindungsabschnitt mit einer Oberseite und einer Unterseite, wobei die Oberseite des Verbindungsabschnitts der Unterseite des ersten Kontaktierungsabschnitts und die Unterseite der Verbindungsabschnitts der Oberseite des zweiten Kontaktierungsabschnitts zugewandt ist.
d. Der erste Kontaktierungsabschnitt und der Verbindungsabschnitt sind über eine erste Biegezone, in der das Kontaktblechteil entlang mindestens einer Biegelinie, bevorzugt entlang einer ersten Biegelinie, umgebogen ist, miteinander verbunden.
e. Der zweite Kontaktierungsabschnitt und der Verbindungsabschnitt sind über eine zweite Biegezone, in der das Kontaktblechteil entlang mindestens einer Biegelinie, bevorzugt entlang einer zweiten Biegelinie, miteinander verbunden.

Besonders zeichnet sich das Kontaktblechteil durch das folgende Merkmal f. aus:
f. Der zweite Kontaktierungsabschnitt weist eine Ausnehmung oder eine Durchbrechung auf, welche eine Aufnahme für die erste Biegezone bildet.

Im Sinne eines möglichst geringen Totvolumens ist es gewünscht, dass das Kontaktblechteil innerhalb des Gehäuses möglichst wenig Raum beansprucht. Es ist daher zweckmäßig, den ersten Kontaktierungsabschnitt, den Verbindungsabschnitt und den zweiten Kontaktierungsabschnitt bei der Montage gegeneinander zu pressen, so dass der Abstand zwischen dem ersten und dem zweiten Kontaktierungsabschnitt und damit zwischen der Unterseite des ersten Kontaktierungsabschnitts und der Oberseite des Verbindungsabschnitts sowie der Oberseite des zweiten Kontaktierungsabschnitts und der Unterseite des Verbindungsabschnitts möglichst gering wird. Im Idealfall stehen die Unterseite des ersten Kontaktierungsabschnitts und die Oberseite des Verbindungsabschnitts sowie die Oberseite des zweiten Kontaktierungsabschnitts und die Unterseite des Verbindungsabschnitts in unmittelbarem Kontakt miteinander.

Problematisch können bei diesem Prozess die Biegezonen, insbesondere die erste Biegezone sein. Beim Biegen von Blechen federn diese stets ein Stück zurück. Um ein Blech in einem gewünschten Winkel zu biegen, muss man das Blech in der Regel etwas über den gewünschten Winkel hinaus umbiegen. Dies wird umso schwerer, je näher der Biegewinkel an 180 ° heranrückt.

Die Ausnehmung / Durchbrechung gewährleistet, dass die erste Biegezone bei der Herstellung des Kontaktblechteils oder bei dessen Montage in die Ebene des zweiten Kontaktierungsabschnitts gedrückt werden kann, gegebenenfalls dauerhaft, und erleichtert somit temporär oder dauerhaft die Kompaktierung des Kontaktblechs und die Reduzierung des Totvolumens.

In bevorzugten Ausführungsformen zeichnet sich das Kontaktblechteil durch mindestens eines der folgenden Merkmale a. bis c. aus:
a. Der erste Kontaktierungsabschnitt ist parallel zum zweiten Kontaktierungsabschnitt ausgerichtet.
b. Der Verbindungsabschnitt ist parallel zum ersten Kontaktierungsabschnitt und/oder zum zweiten Kontaktierungsabschnitt ausgerichtet.
c. Der Verbindungsabschnitt schließt mit dem ersten Kontaktierungsabschnitt und/oder dem zweiten Kontaktierungsabschnitt einen Winkel im Bereich von - 10° bis + 30° ein.

Besonders bevorzugt sind die unmittelbar vorstehenden Merkmale a. und b. oder die unmittelbar vorstehenden Merkmale a. und c. in Kombination miteinander realisiert. Merkmal b. ist dann bevorzugt, wenn der genannte Idealfall eintritt, dass die Unterseite des ersten Kontaktierungsabschnitts und die Oberseite des Verbindungsabschnitts sowie die Oberseite des zweiten Kontaktierungsabschnitts und die Unterseite des Verbindungsabschnitts in unmittelbarem Kontakt miteinander stehen. Häufiger, insbesondere auch vor der Montage des Kontaktblechteils, besteht allerdings kein unmittelbarer Kontakt, so dass der Verbindungsabschnitt mit dem ersten Kontaktierungsabschnitt und/oder dem zweiten Kontaktierungsabschnitt besagten Winkel im Bereich von - 10° bis + 30° einschließt.

Unter einer parallelen Ausrichtung der Kontaktierungsabschnitte ist in dem beschriebenen Zusammenhang zu verstehen, dass die Unterseite des ersten Kontaktierungsabschnitts und die Oberseite des zweiten Kontaktierungsabschnitts gleichmäßig voneinander beabstandet sind. Bei einer parallelen Ausrichtung der Unterseite des ersten Kontaktierungsabschnitts und der Oberseite des Verbindungsabschnitts sowie der Oberseite des zweiten Kontaktierungsabschnitts und der Unterseite des Verbindungsabschnitts ist der Abstand in der Regel Null.

Es ist weiterhin bevorzugt, dass sich das Kontaktblechteil durch mindestens eines der folgenden Merkmale a. und b. auszeichnet:
a. Das Kontaktblechteil weist im ersten Kontaktierungsabschnitt und im zweiten Kontaktierungsabschnitt und im Verbindungsabschnitt jeweils eine gleichmäßige Dicke auf.
b. Das Kontaktblechteil weist im Verbindungsabschnitt die gleiche Dicke wie im ersten Kontaktierungsabschnitt und/oder im zweiten Kontaktierungsabschnitt auf.

Besonders bevorzugt sind die unmittelbar vorstehenden Merkmale a. und b. in Kombination realisiert.

In einigen Ausführungsformen zeichnet sich das Kontaktblechteil durch das folgende Merkmal a. aus:
a. Das Kontaktblechteil weist im zweiten Kontaktierungsabschnitt mindestens eine Sicke auf, die auf der Oberseite des zweiten Kontaktierungsabschnitts als Vertiefung und auf der Unterseite als Erhöhung auftritt.

Eine solche Sicke kann hilfreich sein, um einen guten Schweißkontakt zu einer Elektrode zu bilden, was nachstehend noch näher beschrieben wird.

In weiteren bevorzugten Ausführungsformen zeichnet sich das Kontaktblechteil durch mindestens eines der folgenden Merkmale a. bis c. aus:
a. Das Kontaktblechteil umfasst im ersten Kontaktierungsabschnitt ausschließlich Bereiche, die sich in einer ebenen Schicht erstrecken.
b. Das Kontaktblechteil umfasst im zweiten Kontaktierungsabschnitt ausschließlich Bereiche, die sich in einer ebenen Schicht erstrecken.
c. Das Kontaktblechteil umfasst im Verbindungsabschnitt ausschließlich Bereiche, die sich in einer ebenen Schicht erstrecken.

Besonders bevorzugt sind die unmittelbar vorstehenden Merkmale a. bis c. in Kombination realisiert.

In besagten Fällen, in denen der erste Kontaktierungsabschnitt parallel zum zweiten Kontaktierungsabschnitt ausgerichtet ist, sind entsprechend auch die ebenen Schichten, in welchen sich die Bereiche des ersten und des zweiten Kontaktierungsabschnitts erstrecken, parallel zueinander ausgerichtet. Die ebene Schicht, in der sich die Bereiche des Verbindungsabschnitts erstrecken, kann die beiden anderen ebenen Schichten schneiden, nämlich wenn der Verbindungsabschnitt nicht parallel zum ersten Kontaktierungsabschnitt und zum zweiten Kontaktierungsabschnitt ausgerichtet ist. In der Regel ist das vor der Montage des Kontaktblechteils stets der Fall.

In alternativen bevorzugten Ausführungsformen zeichnet sich das Kontaktblechteil durch mindestens eines der folgenden Merkmale a. bis c. aus:
a. Das Kontaktblechteil umfasst im ersten Kontaktierungsabschnitt ausschließlich Bereiche, die sich in einer ebenen Schicht erstrecken.
b. Das Kontaktblechteil umfasst im zweiten Kontaktierungsabschnitt einen ersten Bereich, der sich in einer ebenen Schicht erstreckt, und mindestens einen zweiten Bereich, der sich nicht in dieser ebenen Schicht erstreckt.
c. Das Kontaktblechteil umfasst im Verbindungsabschnitt ausschließlich Bereiche, die sich in einer ebenen Schicht erstrecken.

Besonders bevorzugt sind die unmittelbar vorstehenden Merkmale a. bis c. in Kombination realisiert.

Diese alternativen bevorzugten Ausführungsformen sind vor allem relevant, wenn das Kontaktblechteil im zweiten Kontaktierungsabschnitt die mindestens eine Sicke aufweist. In diesem Fall umfasst der mindestens eine zweite Bereich den Bereich der Vertiefung bzw. der Erhöhung, die sich nämlich nicht in der Ebene des ersten Bereichs erstreckt.

In Fällen, in denen der zweite Kontaktierungsabschnitt die mindestens eine Sicke aufweist, ist es besonders bevorzugt, dass der erste Kontaktierungsabschnitt parallel zum ersten Bereich des zweiten Kontaktierungsabschnitts ausgerichtet ist.

Unter einer ebenen Schicht ist in den obigen Zusammenhängen eine nicht gebogene Schicht mit einer gleichmäßigen Dicke zu verstehen, vorzugsweise einer Dicke, welche die Dicke des Kontaktblechteils im jeweiligen Abschnitt um nicht mehr als 10 % überschreitet. Besonders bevorzugt entspricht die Dicke der ebenen Schicht der Dicke des Kontaktblechteils im jeweiligen Abschnitt.

Die Durchbrechung oder Ausnehmung liegt bevorzugt in der ebenen Schicht, in der sich die Bereiche oder der erste Bereich des zweiten Kontaktierungsabschnitts erstrecken. Im Fall einer Durchbrechung wird diese von den Bereichen oder dem ersten Bereich umgeben.

Das Kontaktblechteil zeichnet sich bevorzugt durch mindestens eines der folgenden Merkmale a. und b. aus:
a. Der erste Kontaktierungsabschnitt ist ein endständiger Kontaktierungsabschnitt.
b. Der zweite Kontaktierungsabschnitt ist ein endständiger Kontaktierungsabschnitt.

Besonders bevorzugt sind die unmittelbar vorstehenden Merkmale a. und b. in Kombination realisiert. Bevor das Kontaktblechteil entlang den erwähnten Biegelinien gebogen wird, handelt es sich bei den beiden Kontaktierungsabschnitten entsprechend um Endstücke des Kontaktblechteils.

In einer weiteren bevorzugten Ausführungsform zeichnet sich das Kontaktblechteil durch das folgende Merkmal a. aus:
a. Der erste Kontaktierungsabschnitt und der zweite Kontaktierungsabschnitt und der Verbindungsabschnitt weisen jeweils eine Durchbrechung auf, welche in Richtung senkrecht zum zweiten Kontaktierungsabschnitt miteinander überlappen und einen Durchlass, bevorzugte einen geraden Durchlass, durch die Abschnitte des Kontaktblechteils bilden.

Der Durchlass erleichtert das Einfüllen eines Elektrolyten. So kann der Elektroden-Separator-Verbund stirnseitig mit dem Elektrolyten getränkt werden.

Jedes Energiespeicherelement, das ein Kontaktblechteil, wie es oben beschrieben ist, umfasst, ist Gegenstand der vorliegenden Erfindung.

Besonders bevorzugt weist das erfindungsgemäße Energiespeicherelement die folgenden Merkmale a. bis c. auf:
a. Das Energiespeicherelement umfasst einen Elektroden-Separator-Verbund mit der Sequenz Anode / Separator / Kathode.
b. Das Energiespeicherelement umfasst ein luft- und flüssigkeitsdicht verschlossenes Gehäuse, in dem der Elektroden-Separator-Verbund angeordnet ist.
c. Der Elektroden-Separator-Verbund ist über das Kontaktblechteil elektrisch mit einem Teil des Gehäuses oder einem durch das Gehäuse geführten elektrischen Pol verbunden.

Das Energiespeicherelement kann ein prismatisches Gehäuse aufweisen oder ein zylindrisches Gehäuse. Entsprechend hat auch der Elektroden-Separator-Verbund bevorzugt eine im Wesentlichen prismatische Form oder eine im Wesentlichen zylindrische Form. Im Falle einer prismatischen Form umfasst der Elektroden-Separator-Verbund bevorzugt eine Vielzahl von Elektroden in gestapelter Form, beispielsweise Elektroden mit einer rechteckigen Grundform. Wenn der Elektroden-Separator-Verbund eine im Wesentlichen zylindrische Form aufweist, dann besteht er bevorzugt aus bandförmigen Elektroden, die spiralförmig aufgewickelt sind. Zwischen entgegengesetzt gepolten Elektroden sind dabei jeweils Separatoren oder Schichten aus einem Festelektrolyten angeordnet. Im Fall von Separatoren sind diese sowie die Elektroden bevorzugt mit einem Elektrolyten getränkt.

Besonders bevorzugt ist das Energiespeicherelement eine zylindrische Rundzelle und umfasst entsprechend die Anode und die Kathode bevorzugt in Form von Bändern. Darüber hinaus umfasst er bevorzugt einen bandförmigen Separator oder zwei bandförmige Separatoren. In diesen bevorzugten Ausführungsformen zeichnet sich das Energiespeicherelement durch die folgenden Merkmale a. bis f. aus:
a. Der Elektroden-Separator-Verbund liegt in Form eines zylindrischen Wickels mit einer ersten endständigen Stirnseite und einer zweiten endständigen Stirnseite und einem dazwischen liegenden Wickelmantel vor.
b. Die Anode des Elektroden-Separator-Verbunds umfasst einen Anodenstromkollektor, der einen ersten Längsrand und einen dazu parallelen zweiten Längsrand aufweist.
c. Der Anodenstromkollektor umfasst einen Hauptbereich, der mit einer Schicht aus negativem Elektrodenmaterial beladen ist, sowie einen freien Randstreifen, der sich entlang seines ersten Längsrands erstreckt und der nicht mit dem negativen Elektrodenmaterial beladen ist.
d. Die Kathode des Elektroden-Separator-Verbunds umfasst einen Kathodenstromkollektor, der einen ersten Längsrand und einen dazu parallelen zweiten Längsrand aufweist.
e. Der Kathodenstromkollektor umfasst einen Hauptbereich, der mit einer Schicht aus positivem Elektrodenmaterial beladen ist, sowie einen freien Randstreifen, der sich entlang seines ersten Längsrands erstreckt und der nicht mit dem Elektrodenmaterial beladen ist.
f. Die Anode und die Kathode sind innerhalb des Elektroden-Separator-Verbunds derart angeordnet, dass der erste Längsrand des Anodenstromkollektors aus der ersten endständigen Stirnseite und der erste Längsrand des Kathodenstromkollektors aus der zweiten endständigen Stirnseite des Elektroden-Separator-Verbunds austritt.

Die Stirnseiten sind bevorzugt durch einen kreisförmigen Rand begrenzt.

In besonders bevorzugten Ausführungsformen zeichnet sich das Energiespeicherelement weiter durch die folgenden Merkmale a. bis c. aus:
a. Das Gehäuse umfasst einen metallischen Gehäusebecher mit einer endständigen kreisförmigen Öffnung und eine Deckelbaugruppe mit einem kreisförmigen Rand, welche die kreisförmige Öffnung verschließt.
b. Die Oberseite des ersten Kontaktierungsabschnitts ist an der Deckelbaugruppe fixiert, vorzugsweise an die Deckelgruppe geschweißt.
c. Die Unterseite des zweiten Kontaktierungsabschnitts ist durch Verschweißung an einem aus einer der Stirnseiten des Elektroden-Separator-Verbunds austretenden Längsrand eines der Stromkollektoren fixiert.

Das bei der Beschreibung des Kontaktblechteils erwähnte erste Bauteil des Energiespeicherelements kann also eine Deckelbaugruppe sein und das erwähnte zweite Bauteil des Energiespeicherelements kann also der beschriebene Elektroden-Separator-Verbund sein.

Es ist grundsätzlich auch möglich, dass auf den an einer der Stirnseiten des Elektroden-Separator-Verbunds austretende Längsrand eines der Stromkollektoren ein zusätzliches Metallblechteil aufgeschweißt ist, und die Unterseite des zweiten Kontaktierungsabschnitts durch Verschweißung an dem zusätzlichen Metallblechteil fixiert ist. In diesem Fall verbindet das zusätzliche Metallblechteil den Längsrand elektrisch mit dem Kontaktblechteil und das Kontaktblechteil verbindet das zusätzliche Metallblechteil elektrisch mit einem Teil des Gehäuses oder einem durch das Gehäuse geführten elektrischen Pol.

Die Deckelbaugruppe zeichnet sich bevorzugt durch die folgenden Merkmale a. bis j. aus:
a. Die Deckelbaugruppe umfasst eine Polkappe mit einem kreisförmigen Rand.
b. Die Deckelbaugruppe umfasst eine erste Metallscheibe mit einem kreisförmigen Rand.
c. Die Deckelbaugruppe umfasst eine zweite Metallscheibe mit einem kreisförmigen Rand.
d. Die Deckelbaugruppe umfasst eine ringförmige Dichtung.
e. Die Deckelbaugruppe umfasst einen ringförmigen Isolator.
f. Die erste Metallscheibe ist zwischen der Polkappe und der zweiten Metallscheibe angeordnet.
g. Der ringförmige Isolator isoliert die erste Metallscheibe und die zweite Metallscheibe elektrisch gegeneinander.
h. Die erste Metallscheibe steht in unmittelbarem Kontakt zur Polkappe.
i. Die ringförmige Dichtung ist auf den kreisförmigen Rand der Polkappe und/oder der ersten Metallscheibe aufgezogen.
j. Die Oberseite des ersten Kontaktierungsabschnitts ist an die zweite Metallscheibe geschweißt.

In besonders bevorzugten Ausführungsformen zeichnet sich das Energiespeicherelement weiterhin durch die folgenden Merkmale a. bis c., bevorzugt durch die folgenden Merkmale a. bis d., aus:
a. Der Gehäusebecher umfasst in axialer Abfolge einen Boden, einen Zentralabschnitt und einen Verschlussabschnitt.
b. Der Zentralabschnitt ist zylindrisch ausgebildet und in dem Zentralabschnitt steht der Wickelmantel des als Wickel ausgebildeten Elektroden-Separator-Verbunds mit der Innenseite des Gehäusebechers in Kontakt.
c. In dem Verschlussabschnitt steht die ringförmige Dichtung der Deckelbaugruppe in einem Presskontakt mit dem Rand der Polkappe und/oder dem Rand der ersten Metallscheibe und der Innenseite des Gehäusebechers.
d. Der Gehäusebecher weist in dem Verschlussabschnitt einen die kreisförmige Öffnung definierenden Öffnungsrand auf, der radial nach innen über den von der Dichtung umschlossenen Rand der Polkappe und/oder der ersten Metallscheibe umgebogen ist und der die Deckelbaugruppe einschließlich der Dichtung in der kreisförmigen Öffnung des Gehäusebechers formschlüssig fixiert.

Der Begriff "Rand der Polkappe und/oder der ersten Metallscheibe" umfasst Ausführungsformen, bei denen sich die Durchmesser der Polkappe und der Metallscheibe entweder unterscheiden oder gleich sind. Maßgeblich hinsichtlich des Presskontakts ist das Bauteil mit dem größeren Durchmesser, denn an ihm liegt die Dichtung an.

Wie oben bereits beschrieben, gewährleistet die Ausnehmung / Durchbrechung, dass die erste Biegezone bei der Herstellung des Kontaktblechteils und/oder bei dessen Montage in die Ebene des zweiten Kontaktierungsabschnitts gedrückt werden kann.

In einigen Ausführungsformen verbleibt die erste Biegezone nur temporär in der Ausnehmung oder der Durchbrechung. Aus diesem Prozess kann aber auch ein Kontaktblechteil resultieren, bei dem die erste Biegezone oder ein Teil der ersten Biegezone dauerhaft in die Ausnehmung oder Durchbrechung und somit vorzugsweise auch in die erwähnte ebene Schicht, in der sich die Bereiche oder der erste Bereich des zweiten Kontaktierungsabschnitts erstrecken, hineinragt. Eine solche Konfiguration ist besonders effizient zur Reduzierung des Totvolumens.

Der Elektroden-Separator-Verbund steht mit der Innenseite des Gehäusebechers bevorzugt in unmittelbarem Kontakt. Besonders bevorzugt liegt er unmittelbar an der Innenseite des Gehäusebechers an. In einigen Ausführungsformen kann es allerdings vorgesehen sein, die Innenseite, beispielsweise mittels einer Folie, elektrisch zu isolieren. In diesem Fall steht der Elektroden-Separator-Verbunds in Kontakt über die Folie mit der Innenwand in Kontakt.

Der Boden des Gehäusebechers ist bevorzugt kreisförmig ausgebildet. Der Gehäusebecher wird meist durch Tiefziehen gebildet. Es ist aber auch möglich, den Becher durch Einschweißen eines Bodens in ein rohrförmiges Halbteil zu bilden.

Bevorzugt liegt die Höhe eines als zylindrische Rundzelle ausgebildeten erfindungsgemäßen Energiespeicherelements im Bereich von 50 mm bis 150 mm. Sein Durchmesser liegt bevorzugt im Bereich von 15 mm bis 60 mm. Zylindrische Rundzellen mit diesen Formfaktoren eignen sich beispielsweise zur Stromversorgung elektrischer Antriebe von Kraftfahrzeugen.

### Ausführungsform als Lithium-Ionen-Energiespeicherelement

In einer besonders bevorzugten Ausführungsform der Erfindung basiert das erfindungsgemäße Energiespeicherelement auf Lithium-lonen-Technologie.

Für die Elektroden des Energiespeicherelements können im Grunde sämtliche für sekundäre Lithium-Ionen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Weiterhin eignen sich auch dünne Anoden aus metallischem Lithium.

Für die positiven Elektroden kommen als Aktivmaterialien beispielsweise Lithium-MetalloxidVerbindungen und Lithium-Metallphosphat-Verbindungen wie LiCoOz und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden eines Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, Styrol-Butadien-Kautschuk oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Das Energiespeicherelement umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosul-fonyl)imid (LiFSI) und Lithiumbis(oxalato)borat (LiBOB).

Die Nennkapazität eines als zylindrische Rundzelle ausgebildeten Energiespeicherelements auf Lithium-Ionen-Basis beträgt bevorzugt bis zu 15000 mAh. Mit dem Formfaktor von 21 x 70 hat die Rundzelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Rundzelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Ausführungsform auf Natrium-Ionen-Basis

In weiteren Ausführungsformen kann es sich bei dem Energiespeicherelement auch um eine Natrium-Ionen-Zelle, eine Kalium-Ionen-Zelle, eine Calzium-Ionen-Zelle, eine Magnesium-lonen-Zelle oder eine Aluminium-Ionen-Zelle handeln. Unter diesen Varianten sind Energiespeicherelemente mit Natrium-Ionen-Zellchemie besonders bevorzugt.

Bevorzugt umfasst das Energiespeicherelement auf Basis von Natrium-Ionen einen Elektrolyten, der mindestens eines der folgenden Lösungsmittel und mindestens eines der folgenden Leitsalze umfasst:
Als Lösungsmittel kommen insbesondere organische Carbonate, Ether, Nitrile und Mischungen daraus in Frage. Bevorzugte Beispiele sind:
- Carbonate: Propylencarbonat (PC), Ethylencarbonat-Propylencarbonat (EC-PC), Propylencarbonat-Dimethylcarbonat-Ethylmethylcarbonat (PC-DMC-EMC), Ethylencarbonat-Diethylcarbonat (EC-DEC), Ethylencarbonat-Dimethylcarbonat (EC-DMC), Ethylencarbonat-Ethylmethylcarbonat (EC-EMC), Ethylencarbonat-Dimethylcarbonat-Ethylmethylcarbonat (EC-DMC-EMC), Ethylencarbonat-Dimethylcarbonat-Diethylcarbonat (EC-DMC-DEC)
- Ether: Tetrahydrofuran (THE), 2-Methyltetrahydrofuran, Dimethylether (OME), 1,4-dioxane (DX), 1,3-dioxolane (DOL), Diethylenglykoldimethylether (DEGDME), Tetraethylenglykoldimethylether (TEGDME)
- Nitrile: Acetonitril (ACN), Adiponitril (AON), y-Butyrolactone (GBL)

Weiterhin kommen auch Trimethylphosphat (TMP) und Tris(2,2,2-trifluoroethyl)phosphat (TFP) in Frage.

### Bevorzugte Leitsalze sind:

NaPF₆, Natrium-difluoro(oxalato)borat (NaBOB), NaBF₄, Natriumbis(fluorosulfonyl)imid (NaFSI), Natrium-2-trifluoromethyl-4,5-dicyanoimidazol (NaTDI), Natrium-bis(trifluorome-thansulfonyl)imid (NaTFSI), NaAsF₆, NaBF₄, NaClO₄, NaB(C₂O₄)₂, NaP(C₆H₄O₂)₃; NaCF₃SO₃, Natriumtriflat (NaTf) und Et₄NBF₄.

Dem Elektrolyten können in bevorzugten Ausführungsformen Additive zugesetzt sein. Beispiele bevorzugter Additive, insbesondere zur Stabilisierung, sind die folgenden:
Fluoroethylencarbonat (FEC), Transdifluoroethylencarbonat (DFEC), Ethylensulfit (ES), Vinylencarbonat (VC), Bis(2,2,2-trifluoroethyl)ether (BTFE), Natrium-2-trifluoromethyl-4,5-dicyanoimidazol (NaTDI), Natriumbis(fluorosulfonyl)imide (NaFSI), Aluminumchlorid (AlCl3), Ethylensulfat (DTD), Natriumdifluorophosphat (NaPO₂F₂), Natriumdifluoro(oxalato)borat (NaODFB), Natriumdifluorobisoxalatophosphat (NaDFOP) und Tris(trimethylsilyl)borat (TMSB).

Bei dem negativen Elektrodenmaterial eines Energiespeicherelements auf Basis von Natrium-Ionen handelt es sich bevorzugt um mindestens eines der folgenden Materialien:
- Kohlenstoff, besonders präferiert Hardcarbon (rein oder mit Stickstoff- und/oder Phosphor-Dotierung) oder Softcarbon oder Graphene-basierte Materialien (mit N-dotierung); Kohlenstoffnanotubes, Graphit
- Phosphor oder Schwefel (Konversionsanode)
- Polyanionen: Na₂Ti₃O₇, Na₃Ti₂(PO₄)₃, TiP₂O₇, TiNb₂O₇, Na-Ti-(PO₄)₃, Na-V-(PO₄)₃
- Preussisch Blau: Na-arme Variante (für Systeme mit wässrigem Elektrolyt)
- Übergangsmetalloxide: V₂O₅, MnO₂, TiO₂, NbzOs, Fe₂O₃, Na₂Ti₃O₇, NaCrTiO₄, Na₄Ti₅O₁₂
- MXene mit M= Ti, V, Cr, Mo oder Nb und A = Al, Si, und Ga sowie X= C und/oder N, z.B. Ti₃C₂
- Organisch: z.B. Na-Terephthalate (Na₂C₈H₂O₄)

Alternativ kann anodenseitig grundsätzlich auch eine Na-Metallanode zum Einsatz kommen.

Bei dem positiven Elektrodenmaterial eines Energiespeicherelements auf Basis von Natrium-Ionen handelt es sich beispielsweise um mindestens eines der folgenden Materialien:
- Polyanionen: NaFePO₄ (Triphylit-Typ), Na₂Fe(P₂O₇), Na₄Fe₃(PO₄)₂(P₂O₇), Na₂FePO₄F, Na/Na₂[Fe_{1/2}Mn_{1/2}]PO₄F, Na₃V₂(PO₄)₂F₃, Na₃V₂(PO₄)₃, Na₄(CoMnNi)₃(PO₄)₂P₂O₇, Na-CoPO₄, Na₂CoPO₄F
- Silikate: Na₂MnSiO₄, Na₂FeSiO₄
- Schichtoxide: NaCoO₂, NaFeO₂, NaNiO₂, NaCrO₂, NaVO₂, NaTiO₂, Na(FeCo)O₂, Na(Ni-FeCo)₃O₂, Na(NiFeMn)O₂, and Na(NiFeCoMn)O₂, Na(NiMnCo)O₂

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei die Aktivmaterialien bevorzugt partikulär eingesetzt werden und benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Na-)Polyacrylat, Styrol-Butadien-Kautschuk, (Na)-Alginat oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Besonders bevorzugt bestehen bei einem Energiespeicherelement auf Basis von Natrium-lonen-Technologie sowohl der Anoden- als auch der Kathodenstromkollektor aus Aluminium oder einer Aluminiumlegierung. Auch das Gehäuse und die Kontaktplatten sowie ggf. vorhandene weitere Stromleiter innerhalb des Gehäuses können aus Aluminium oder aus der Aluminiumlegierung bestehen.

### Bevorzugte Ausgestaltung des Gehäuses

Besonders bevorzugt zeichnet sich das erfindungsgemäße Energiespeicherelement durch mindestens eines der folgenden Merkmale a. bis c. aus:
a. Der Zentralabschnitt und der Verschlussabschnitt werden durch eine Einbuchtung, welche die Außenseite des Gehäusebechers ringförmig umläuft, getrennt.
b. Der Gehäusebecher weist in dem Zentralabschnitt und dem Verschlussabschnitt einen identischen maximalen Außendurchmesser auf.
c. Im Bereich der Einbuchtung ist der Außendurchmesser des Gehäusebechers um das 4-bis 12-fache der Wandstärke des Gehäusebechers in diesem Bereich reduziert.

Es ist bevorzugt, dass zumindest die unmittelbar vorstehenden Merkmale a. und b. in Kombination realisiert sind. Besonders bevorzugt sind alle drei unmittelbar vorstehenden Merkmale a. bis c. in Kombination realisiert.

Bevorzugt liegt die ringförmige Dichtung in dem Verschlussabschnitt komprimiert vor. Sie wird bevorzugt radial gegen den kreisförmigen Rand der Polkappe und/oder der ersten Metallscheibe gepresst.

### Ausführungsformen des Kontaktblechteils

Grundsätzlich kann das Kontaktblechteil mit dem Anodenstromkollektor oder dem Kathodenstromkollektor elektrisch verbunden sein.

In einer besonders bevorzugten Ausführungsform der Erfindung zeichnet sich ein mit dem Anodenstromkollektor elektrisch verbundenes Kontaktblechteil durch mindestens eines der folgenden Merkmale a. und b. aus:
a. Das Kontaktblechteil besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Kontaktblechteil besteht aus dem gleichen Material wie der Anodenstromkollektor.

In einer weiteren besonders bevorzugten Ausführungsform der Erfindung zeichnet sich ein mit dem Kathodenstromkollektor elektrisch verbundenes Kontaktblechteil durch mindestens eines der folgenden Merkmale a. und b. aus:
a. Das Kontaktblechteil besteht aus Aluminium oder einer Aluminiumlegierung.
b. Das Kontaktblechteil besteht aus dem gleichen Material wie der Anodenstromkollektor.

Besonders bevorzugt zeichnen sich das mit dem Anodenstromkollektor verbundene Kontaktblechteil und/oder das mit dem Kathodenstromkollektor elektrisch verbundene Kontaktblechteil durch mindestens eines der unmittelbar folgenden Merkmale a. bis g. aus:
a. Das Kontaktblechteil weist eine bevorzugt gleichmäßige Dicke im Bereich von 50 µm bis 600 µm, bevorzugt im Bereich von 150 µm bis 350 µm, auf.
b. Das Kontaktblechteil ist derart dimensioniert, dass es mindestens 40 %, bevorzugt mindestens 70 %, besonders bevorzugt mindestens 80 % der ersten endständigen oder der zweiten endständigen Stirnseite abdeckt.

Es ist besonders bevorzugt, dass die unmittelbar vorstehenden Merkmale a. und b. in Kombination miteinander realisiert sind.

Die möglichst großflächige Abdeckung der Stirnseite ist für das thermische Management des erfindungsgemäßen Energiespeicherelements von Bedeutung. Je größer die Abdeckung ist, desto eher ist es möglich, möglichst lange Abschnitte des ersten Längsrands des jeweiligen Stromkollektors zu kontaktieren. In Elektroden-Separator-Verbund gebildete Wärme kann so gut über das Kontaktblechteil abgeführt werden.

Bevorzugt sitzt der zweite Kontaktierungsabschnitt des Kontaktblechteils mit seiner Unterseite flach auf dem ersten Längsrand des Stromkollektors, mit dem er verschweißt ist, auf. Im Idealfall steht er mit dem Längsrand über einen Großteil seiner Länge oder über seine gesamte Länge in Kontakt.

Es hat sich in einigen Ausführungsformen als vorteilhaft erwiesen, den Längsrand des Stromkollektors einer Vorbehandlung zu unterziehen, bevor das Kontaktblechteil aufgesetzt wird. Insbesondere kann in den Längsrand mindestens eine Vertiefung eingefalzt werden, die zu der mindestens einen Sicke bzw. der länglichen Erhöhung auf der Unterseite des zweiten Kontaktierungsabschnitts des Kontaktblechteils korrespondiert.

Der Längsrand des Stromkollektors kann auch durch eine Vorbehandlung einer gerichteten Umformung unterzogen worden sein. Beispielsweise kann er in eine definierte Richtung umgebogen sein.

Besonders bevorzugt ist das Kontaktblechteil im Bereich der Sicke mit dem ersten Längsrand des jeweiligen Stromkollektors verschweißt, insbesondere über eine oder mehrere in der Sicke angeordnete Schweißnähte.

### Bevorzugte Ausgestaltung von Stromkollektoren und Separatoren

Der Anodenstromkollektor, der Kathodenstromkollektor und der Separator oder die Separatoren der erfindungsgemäßen Zelle weisen bevorzugt die folgenden Dimensionen auf:
- Eine Länge im Bereich von 0,5 m bis 25 m
- Eine Breite im Bereich 40 mm bis 145 mm

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellung des Elektroden-Separator-Verbunds werden die bandförmigen Elektroden und der oder die bandförmigen Separatoren in der Regel einer Wickelvorrichtung zugeführt und in dieser bevorzugt um eine Wickelachse herum spiralförmig aufgewickelt. Eine Verklebung der Elektroden und der Separatoren oder eine Kontaktierung bei erhöhten Temperaturen ist hierbei meist nicht erforderlich. In einigen Ausführungsformen werden die Elektroden und der Separator oder die Separatoren auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Die Stromkollektoren des erfindungsgemäßen Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle eines als Lithium-Ionen-Zelle ausgebildeten erfindungsgemäßen Energiespeicherelements eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle eines als Lithium-Ionen-Zelle ausgebildeten erfindungsgemäßen Energiespeicherelements insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AISiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Es ist bevorzugt, dass die Längsränder des oder der Separatoren die Stirnseiten des als Wickel ausgebildeten Elektroden-Separator-Verbunds bilden.

### Mögliche Ausgestaltungen der Deckelbaugruppe

Das erfindungsgemäße Energiespeicherelement zeichnet sich bevorzugt dadurch aus, dass in die Deckelbaugruppe eine CID-Funktion integriert ist, die gewährleistet, dass im Falle eines zu hohen Drucks in der Zelle der Druck aus dem Gehäuse entweichen kann und gleichzeitig der elektrische Kontakt zwischen der Deckelbaugruppe und dem Elektroden-Separator-Verbund abbrechen kann.

Besonders bevorzugt zeichnet sich das erfindungsgemäße Energiespeicherelement entsprechend durch mindestens eines der folgenden Merkmale a. und b. aus:
a. Die erste Metallscheibe der Deckelbaugruppe umfasst eine metallische Membran, die sich bei einem Überdruck innerhalb des Gehäuses nach außen wölbt oder birst.
b. Die erste Metallscheibe der Deckelbaugruppe mit der Membran steht in unmittelbarem Kontakt mit der Oberseite des ersten Kontaktierungsabschnitts des Kontaktblechteils.

Es ist bevorzugt, dass die unmittelbar vorstehenden Merkmale a. und b. in Kombination realisiert sind.

### Mögliche Ausgestaltungen der Dichtung

Es ist bevorzugt, dass sich das erfindungsgemäße Energiespeicherelement durch mindestens eines der unmittelbar folgenden Merkmale a. und b. auszeichnet:
a. Die Dichtung besteht aus einem Kunststoffmaterial, das einen Schmelzpunkt > 200 °C, bevorzugt > 300 °C, besonders bevorzugt einen Schmelzpunkt > 300 °C und < 350 °C, aufweist.
b. Bei dem Kunststoffmaterial handelt es sich um ein Polyetheretherketon (PEEK), ein Polyimid (PI), ein Polyphenylensulfid (PPS) oder ein Polytetrafluorethylen (PTFE).

Es ist bevorzugt, dass die unmittelbar vorstehenden Merkmale a. und b. in Kombination realisiert sind.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch
- Fig. 1 eine Ansicht einer ersten Ausführungsform eines erfindungsgemäßen Kontaktblechteils;
- Fig. 2 eine Ansicht einer zweiten Ausführungsform eines erfindungsgemäßen Kontaktblechteils;
- Fig. 3 eine Ansicht einer dritten Ausführungsform eines erfindungsgemäßen Kontaktblechteils;
- Fig. 4 einen Elektroden-Separator-Verbund, der Bestandteil eines erfindungsgemäßen Energiespeicherelements ist, sowie dessen Komponenten;
- Fig. 5 einen Ausschnitt eines Querschnitts durch eine erfindungsgemäße Deckelbaugruppe; und
- Fig. 6 eine Gesamtansicht (Querschnittsdarstellung) eines erfindungsgemäßen Energiespeicherelements.

### DETAILLIERTE BESCHREIBUNG DER AUSFÜHRUNGSBEISPIELE

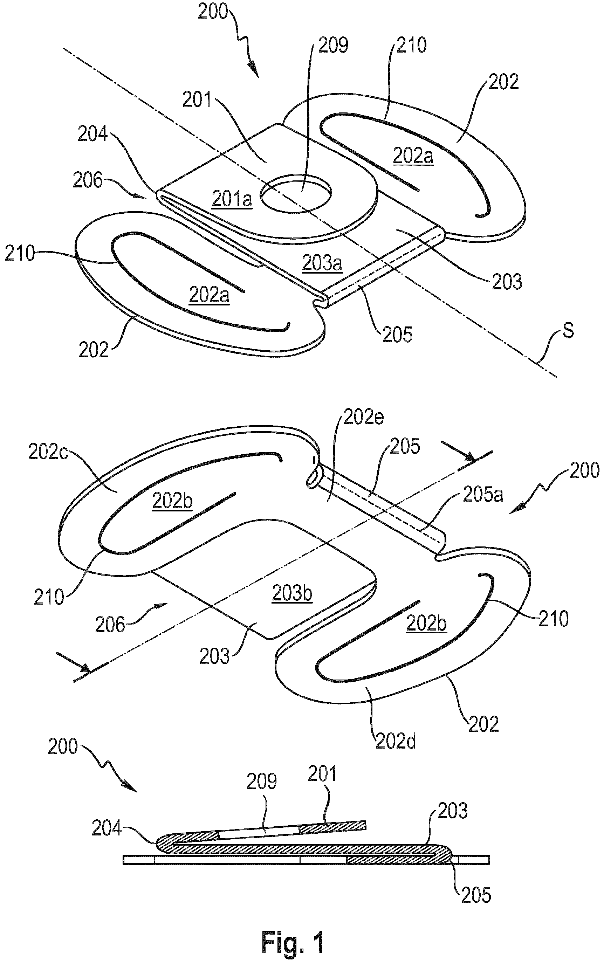

**Fig. 1** zeigt eine bevorzugte Ausführungsform eines erfindungsgemäßen Kontaktblechteils 200 in einer Aufsicht von oben (obere Darstellung) und in einer Aufsicht von unten (mittlere Darstellung). Weiterhin ist ein Querschnitt des Kontaktblechteils 200 entlang der Linie S dargestellt (untere Darstellung). Das Kontaktblechteil 200 umfasst einen ersten endständigen Kontaktierungsabschnitt 201 mit einer Oberseite 201a und einer Unterseite 201b, der zur Kontaktierung mit einem ersten Bauteil eines Energiespeicherelements vorgesehen ist, und einen zweiten endständigen Kontaktierungsabschnitt 202 mit einer Oberseite 202a und einer Unterseite 202b, der zur Kontaktierung mit einem zweiten Bauteil eines Energiespeicherelements vorgesehen ist. Zwischen dem ersten Kontaktierungsabschnitt 201 und dem zweiten Kontaktierungsabschnitt 202 umfasst das Kontaktblechteil 200 einen Verbindungsabschnitt 203 mit einer Oberseite 203a und einer Unterseite 203b. In Folge von Biegevorgängen sind die Oberseite 203a des Verbindungsabschnitts 203 hierbei der Unterseite 201b des ersten Kontaktierungsabschnitts 201 und die Unterseite 203b der Verbindungsabschnitts 203 der Oberseite 202a des zweiten Kontaktierungsabschnitts 202 zugewandt. Der erste Kontaktierungsabschnitt 201 und der Verbindungsabschnitt 203 sind über eine erste Biegezone 204, in der das Kontaktblechteil 200 entlang einer ersten Biegelinie umgebogen ist, miteinander verbunden. Der zweite Kontaktierungsabschnitt 202 und der Verbindungsabschnitt 203 sind über eine zweite Biegezone 205, in der das Kontaktblechteil 200 entlang einer zweiten Biegelinie umgebogen ist, miteinander verbunden. In Folge der erwähnten Biegevorgänge ist der Verbindungsabschnitt 203 parallel zum zweiten Kontaktierungsabschnitt 202 ausgerichtet, während er mit dem ersten Kontaktierungsabschnitt 201 einen Winkel im Bereich von - 10° bis + 30° einschließt. Das Kontaktblechteil 200 weist im Verbindungsabschnitt 203 die gleiche Dicke wie im ersten Kontaktierungsabschnitt 201 und im zweiten Kontaktierungsabschnitt 202 auf. Diese kann typischerweise in einem Bereich von 50 µm bis 600 µm, vorzugsweise im Bereich von 150 µm bis 350 µm, liegen.

Das Kontaktblechteil 200 umfasst im ersten Kontaktierungsabschnitt 201, im zweiten Kontaktierungsabschnitt 202 und im Verbindungsabschnitt 203 ausschließlich Bereiche, die sich in einer ebenen Schicht erstrecken. Die ebene Schicht ist hierbei eine nicht gebogene Schicht mit einer gleichmäßigen Dicke, welche im Wesentlichen der Dicke des Kontaktblechteils 200 im jeweiligen Abschnitt entspricht. Da der Verbindungsabschnitt 203 nicht parallel zum ersten Kontaktierungsabschnitt 201 ist, schneidet die ebene Schicht, in der sich die Bereiche des Verbindungsabschnitts 203 erstrecken, die ebene Schicht, in der sich die Bereiche des ersten Kontaktierungsabschnitts erstrecken, typischerweise entlang der Biegelinie.

Der zweite Kontaktierungsabschnitt 202 weist eine Ausnehmung 206 auf, welche eine Aufnahme für die erste Biegezone 204 bildet. In diese Aufnahme kann die erste Biegezone 204, beispielsweise bei der Montage des Kontaktblechteils 200, hineingedrückt werden. Die Aufnahme 206 wird von den beiden Schenkeln 202c und 202d gebildet, die durch den Verbindungssteg 202e miteinander verbunden sind. Der Steg ist ausreichend lang, so dass die erste Biegezone 204 in die Aufnahme gedrückt werden kann, ohne einen der Schenkel 202c und 202d zu berühren.

Die Ausnehmung 206 liegt in der ebenen Schicht, in der sich die Bereiche oder der erste Bereich des zweiten Kontaktierungsabschnitts 202 erstrecken.

Der erste Kontaktierungsabschnitt 201 weist eine Durchbrechung 209 auf.

Entlang der Linien 210 kann beispielsweise eine Verschweißung des Kontaktblechteils 200 an den aus einer Stirnseite eines Elektroden-Separator-Verbunds austretenden Rand eines Stromkollektors erfolgen.

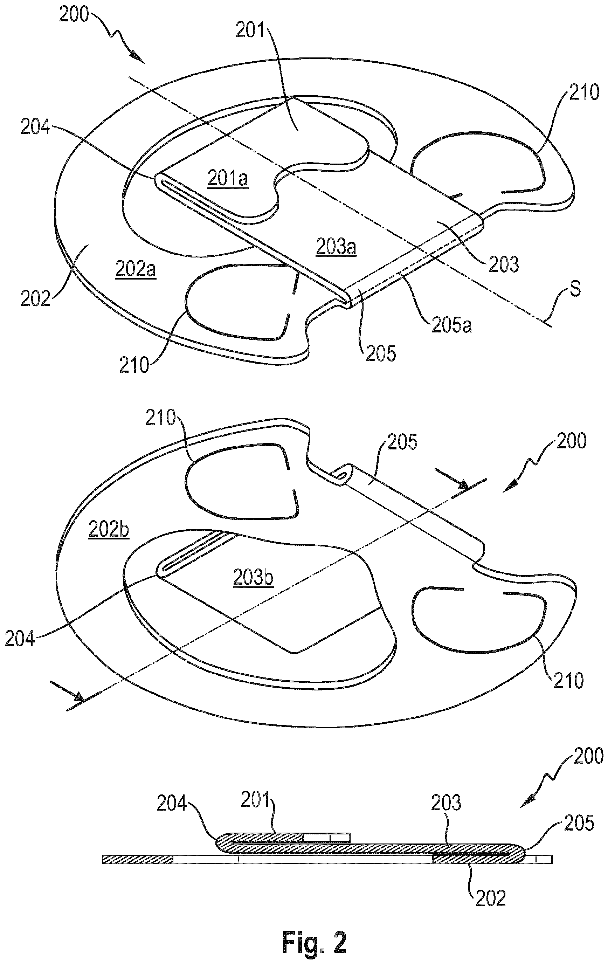

**Fig. 2** zeigt eine weitere bevorzugte Ausführungsform eines erfindungsgemäßen Kontaktblechteils 200 in einer Aufsicht von oben (obere Darstellung) und in einer Aufsicht von unten (mittlere Darstellung). Weiterhin ist ein Querschnitt des Kontaktblechteils 200 entlang der Linie S dargestellt (untere Darstellung). Das Kontaktblechteil 200 umfasst einen ersten endständigen Kontaktierungsabschnitt 201 mit einer Oberseite 201a und einer Unterseite 201b, der zur Kontaktierung mit einem ersten Bauteil eines Energiespeicherelements vorgesehen ist, und einen zweiten endständigen Kontaktierungsabschnitt 202 mit einer Oberseite 202a und einer Unterseite 202b, der zur Kontaktierung mit einem zweiten Bauteil eines Energiespeicherelements vorgesehen ist. Zwischen dem ersten Kontaktierungsabschnitt 201 und dem zweiten Kontaktierungsabschnitt 202 umfasst das Kontaktblechteil 200 einen Verbindungsabschnitt 203 mit einer Oberseite 203a und einer Unterseite 203b. In Folge von Biegevorgängen sind die Oberseite 203a des Verbindungsabschnitts 203 hierbei der Unterseite 201b des ersten Kontaktierungsabschnitts 201 und die Unterseite 203b der Verbindungsabschnitts 203 der Oberseite 202a des zweiten Kontaktierungsabschnitts 202 zugewandt. Der erste Kontaktierungsabschnitt 201 und der Verbindungsabschnitt 203 sind über eine erste Biegezone 204, in der das Kontaktblechteil 200 entlang einer ersten Biegelinie umgebogen ist, miteinander verbunden. Der zweite Kontaktierungsabschnitt 202 und der Verbindungsabschnitt 203 sind über eine zweite Biegezone 205, in der das Kontaktblechteil 200 entlang einer zweiten Biegelinie umgebogen ist, miteinander verbunden. In Folge der erwähnten Biegevorgänge ist der Verbindungsabschnitt 203 parallel zum ersten Kontaktierungsabschnitt 201 und zum zweiten Kontaktierungsabschnitt 202 ausgerichtet. Das Kontaktblechteil 200 weist im Verbindungsabschnitt 203 die gleiche Dicke wie im ersten Kontaktierungsabschnitt 201 und im zweiten Kontaktierungsabschnitt 202 auf. Diese kann typischerweise in einem Bereich von 50 µm bis 600 µm, vorzugsweise im Bereich von 150 µm bis 350 µm, liegen.

Das Kontaktblechteil 200 umfasst im ersten Kontaktierungsabschnitt 201, im zweiten Kontaktierungsabschnitt 202 und im Verbindungsabschnitt 203 ausschließlich Bereiche, die sich in einer ebenen Schicht erstrecken. Die ebene Schicht ist hierbei eine nicht gebogene Schicht mit einer gleichmäßigen Dicke, welche im Wesentlichen der Dicke des Kontaktblechteils 200 im jeweiligen Abschnitt entspricht. Da der Verbindungsabschnitt 203 parallel zu den Kontaktierungsabschnitten 201 und 202 ist, schneiden sich auch die ebenen Schichten, in denen sich die Bereiche des Verbindungsabschnitts 203 und der Kontaktierungsabschnitten 201 und 202 erstrecken, nicht.

Der zweite Kontaktierungsabschnitt 202 weist eine ovale Durchbrechung 207 auf, welche eine Aufnahme für die erste Biegezone 204 bildet. In diese Aufnahme kann die erste Biegezone 204, beispielsweise bei der Montage des Kontaktblechteils 200, hineingedrückt werden. Die Durchbrechung 207 ist ausreichend groß dimensioniert, dass die erste Biegezone 204 in die Aufnahme gedrückt werden kann, ohne einen Rand der Durchbrechung zu berühren.

Die Durchbrechung 207 liegt in der ebenen Schicht, in der sich die Bereiche oder der erste Bereich des zweiten Kontaktierungsabschnitts 202 erstrecken, und wird von den Bereichen oder dem ersten Bereich eingerahmt.

Entlang der Linien 210 kann beispielsweise eine Verschweißung des Kontaktblechteils 200 an den aus einer Stirnseite eines Elektroden-Separator-Verbunds austretenden Rand eines Stromkollektors erfolgen.

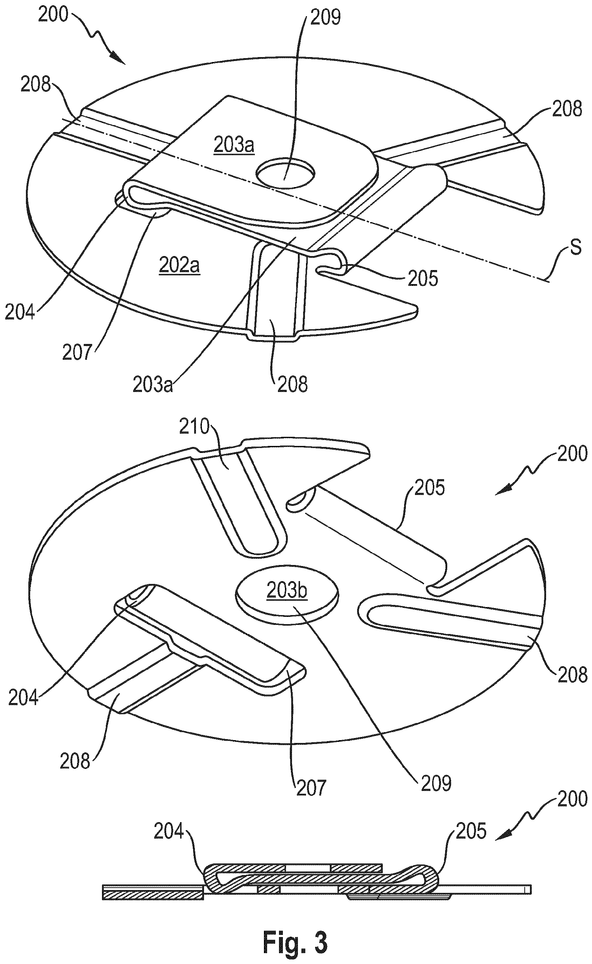

**Fig. 3** zeigt eine weitere bevorzugte Ausführungsform eines erfindungsgemäßen Kontaktblechteils 200 in einer Aufsicht von oben (obere Darstellung) und in einer Aufsicht von unten (mittlere Darstellung). Weiterhin ist ein Querschnitt des Kontaktblechteils 200 entlang der Linie S dargestellt (untere Darstellung). Das Kontaktblechteil 200 umfasst einen ersten endständigen Kontaktierungsabschnitt 201 mit einer Oberseite 201a und einer Unterseite 201b, der zur Kontaktierung mit einem ersten Bauteil eines Energiespeicherelements vorgesehen ist, und einen zweiten endständigen Kontaktierungsabschnitt 202 mit einer Oberseite 202a und einer Unterseite 202b, der zur Kontaktierung mit einem zweiten Bauteil eines Energiespeicherelements vorgesehen ist. Zwischen dem ersten Kontaktierungsabschnitt 201 und dem zweiten Kontaktierungsabschnitt 202 umfasst das Kontaktblechteil 200 einen Verbindungsabschnitt 203 mit einer Oberseite 203a und einer Unterseite 203b. In Folge von Biegevorgängen sind die Oberseite 203a des Verbindungsabschnitts 203 hierbei der Unterseite 201b des ersten Kontaktierungsabschnitts 201 und die Unterseite 203b der Verbindungsabschnitts 203 der Oberseite 202a des zweiten Kontaktierungsabschnitts 202 zugewandt. Der erste Kontaktierungsabschnitt 201 und der Verbindungsabschnitt 203 sind über eine erste Biegezone 204, in der das Kontaktblechteil 200 entlang einer ersten Biegelinie umgebogen ist, miteinander verbunden. Der zweite Kontaktierungsabschnitt 202 und der Verbindungsabschnitt 203 sind über eine zweite Biegezone 205, in der das Kontaktblechteil 200 entlang einer zweiten Biegelinie umgebogen ist, miteinander verbunden. In Folge der erwähnten Biegevorgänge ist der Verbindungsabschnitt 203 parallel zum ersten Kontaktierungsabschnitt 201 und zum zweiten Kontaktierungsabschnitt 202 ausgerichtet. Das Kontaktblechteil 200 weist im Verbindungsabschnitt 203 die gleiche Dicke wie im ersten Kontaktierungsabschnitt 201 und im zweiten Kontaktierungsabschnitt 202 auf. Diese kann typischerweise in einem Bereich von 50 µm bis 600 µm, vorzugsweise im Bereich von 150 µm bis 350 µm, liegen.

Das Kontaktblechteil 200 weist im zweiten Kontaktierungsabschnitt 202 drei sternförmig angeordnete Sicken 208 auf, die auf der Oberseite 202a des zweiten Kontaktierungsabschnitts 202 als Vertiefung und auf der Unterseite 202b als Erhöhung auftreten. In diesen Sicken 208 kann eine Verschweißung des Kontaktblechteils 200 an den aus einer Stirnseite eines Elektroden-Separator-Verbunds austretenden Rand eines Stromkollektors erfolgen.

Das Kontaktblechteil 200 umfasst im ersten Kontaktierungsabschnitt 201 und im Verbindungsabschnitt 203 ausschließlich Bereiche, die sich in einer ebenen Schicht erstrecken. Im zweiten Kontaktierungsabschnitt 202 umfasst das Kontaktblechteil 200 hingegen einen ersten Bereich, der sich in einer ebenen Schicht erstreckt, und mindestens einen zweiten Bereich, der sich nicht in dieser ebenen Schicht erstreckt. Das Kontaktblechteil 200 umfasst im zweiten Kontaktierungsabschnitt 202 nämlich die drei Sicken 208, und der mindestens eine zweite Bereich um-fasst jeweils den Bereich der Vertiefung bzw. der Erhöhung, der sich nicht in der Ebene des ersten Bereichs erstreckt.

Der zweite Kontaktierungsabschnitt 202 weist eine schlitzförmige Durchbrechung 207 auf, welche eine Aufnahme für die erste Biegezone 204 bildet. Die Durchbrechung 207 liegt in der ebenen Schicht, in der sich die Bereiche oder der erste Bereich des zweiten Kontaktierungsabschnitts 202 erstrecken, und wird von den Bereichen oder dem ersten Bereich eingerahmt. In diese Aufnahme und damit auch in die ebene Schicht, in der sich die Bereiche oder der erste Bereich des zweiten Kontaktierungsabschnitts 202 erstreckt oder erstrecken, ragt die erste Biegezone 204 hinein. Die Durchbrechung 207 ist ausreichend groß dimensioniert, dass die erste Biegezone 204 in die Aufnahme gedrückt werden kann, ohne einen Rand der Durchbrechung 207 zu berühren.

Der erste Kontaktierungsabschnitt 201 weist eine Durchbrechung 209 auf. Der zweite Kontaktierungsabschnitt 202 weist eine zusätzliche Durchbrechung 209 auf.

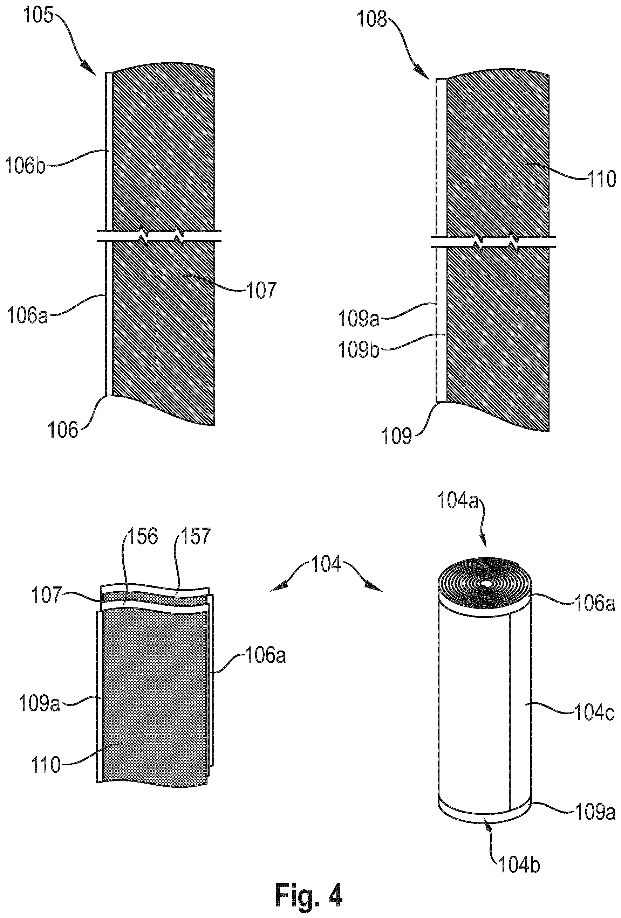

**Fig. 4** veranschaulicht den Aufbau eines Elektroden-Separator-Verbunds 104, der Bestandteil eines erfindungsgemäßen Energiespeicherelements sein kann. Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie aus Kupfer oder Nickel. Diese um-fasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich um eine Aluminiumfolie. Er umfasst einen bandförmigen Hauptbereich, der mit einer Schicht aus positivem Elektrodenmaterial 110 beladen ist, so-wie einen freien Randstreifen 109b, der sich entlang seines ersten Längsrands 109a erstreckt und der nicht mit dem Elektrodenmaterial 110 beladen ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus der Darstellung links unten hervor. Dort sind auch die zwei bandförmigen Separatoren 156 und 157 dargestellt, die im Wickel die Elektroden 105 und 108 voneinander trennen.

In der Darstellung rechts unten ist der Elektroden-Separator-Verbunds 104 in gewickelter Form dargestellt, wie er in einer Energiespeicherzelle gemäß einer der Figuren 1 bis 4 zum Einsatz kommen kann. Die aus den Stirnseiten 104a und 104b austretenden Elektrodenränder 106a und 109a sind gut zu erkennen. Der Wickelmantel 104c wird durch eine Kunststofffolie gebildet.

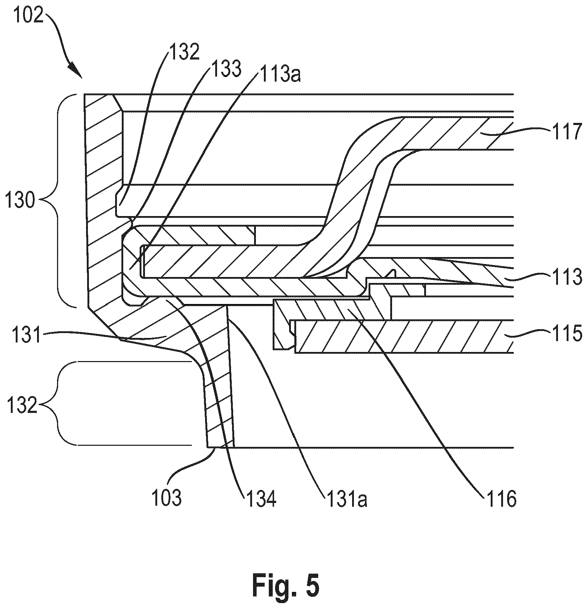

Die in **Fig. 5** dargestellte Deckelbaugruppe 102 umfasst die Polkappe 117, die erste Metallscheibe 113, die zweite Metallscheibe 115, die ringförmige Dichtung 103 und den ringförmigen Isolator 116. Die erste Metallscheibe 113 ist zwischen der Polkappe 117 und der zweiten Metallscheibe 115 angeordnet. Der ringförmige Isolator 116 isoliert die erste Metallscheibe 113 elektrisch gegen die zweite Metallscheibe 115. Die erste Metallscheibe 113 steht hingegen in unmittelbarem Kontakt zur Polkappe 117.

Die ringförmige Dichtung 103 ist auf den kreisförmigen Rand der ersten Metallscheibe 113 aufgezogen, der U-förmig um den Rand der Polkappe 117 umgeschlagen ist.

Die Dichtung 103 umfasst ein äußeres Ringsegment 130 welches an seinem unteren Ende in einem nach innen weisenden Kragen 131 mündet, der das äußere Ringsegment 130 an diesem Ende verengt. Der Kragen 131 weist einen inneren Rand 131a auf, der in das innere Ringsegment 132 übergeht, das einen kleineren Durchmesser als das äußere Ringsegment 130 aufweist.

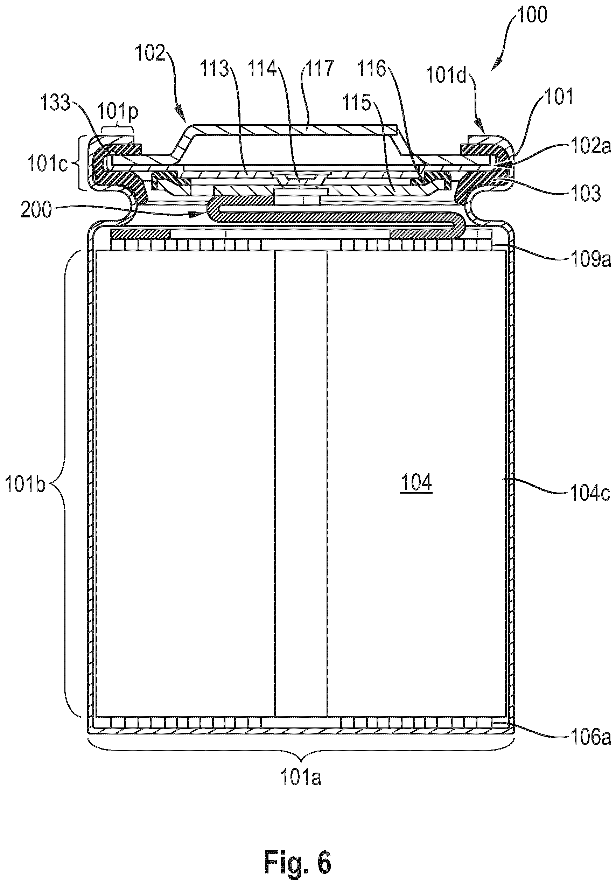

**Fig. 6** zeigt eine erfindungsgemäße Energiespeicherzelle 100 mit einem luft- und flüssigkeitsdicht verschlossenen Gehäuse, das einen metallischen Gehäusebecher 101 mit einer endständigen kreisförmigen Öffnung und eine Deckelbaugruppe 102 mit einem kreisförmigen Rand 102a, welche die kreisförmige Öffnung verschließt, umfasst. Die Deckelbaugruppe 102 ist dabei ähnlich aufgebaut wie die in Fig.5 dargestellte Deckelbaugruppe. Die Dichtung 103 besteht aus einem elektrisch isolierenden Material und umschließt den kreisförmigen Rand 102a der Deckelbaugruppe 102 und isoliert den Gehäusebecher 101 und die Deckelbaugruppe 102 elektrisch voneinander. Der Gehäusebecher 101 umfasst in axialer Abfolge einen Boden 101a, einen Zentralabschnitt 101b und einen Verschlussabschnitt 101c, wobei der Zentralabschnitt 101b zylindrisch ausgebildet ist und in dem Zentralabschnitt 101b der Wickelmantel 104c des als Wickel ausgebildeten Elektroden-Separator-Verbunds 104 mit der Innenseite des Gehäusebechers 101 in Kontakt steht, und in dem Verschlussabschnitt 101c die ringförmige Dichtung 103 in einem Presskontakt mit der Deckelbaugruppe 102 und der Innenseite des Gehäusebechers 101 steht. Der Gehäusebecher 101 weist in dem Verschlussabschnitt 101c einen die kreisförmige Öffnung definierenden Öffnungsrand 101d auf, der radial nach innen über den von der Dichtung 103 umschlossenen Rand 102a der Deckelbaugruppe 102 umgebogen ist und der die Deckelbaugruppe 102 einschließlich der Dichtung 103 in der kreisförmigen Öffnung des Gehäusebechers 101 formschlüssig fixiert.

Die Zelle 100 umfasst auch einen Elektroden-Separator-Verbund 104 in Form eines zylindrischen Wickels mit der Sequenz Anode / Separator / Kathode, der allerdings hier nur schematisch dargestellt ist. Zu erkennen sind lediglich der Längsrand 106a des Anodenstromkollektors 106, der aus der Stirnseite 104a des Elektroden-Separator-Verbunds 104 austritt, und der Längsrand 109a des Anodenstromkollektors 109, der aus der Stirnseite 104b des Elektroden-Separator-Verbunds 104 austritt. Der Längsrand 106a ist, bevorzugt über seine gesamte Länge, unmittelbar mit dem Gehäuseboden 101a verschweißt. Der Längsrand 109a ist, bevorzugt über seine gesamte Länge, unmittelbar mit einem Kontaktblechteil 200 gemäß der in Fig. 2 dargestellten Ausführungsform, verbunden. Hierbei liegt der zweite Kontaktierungsabschnitt 202 mit seiner Unterseite 202b auf dem Längsrand 109a auf. Vorzugsweise ist der Längsrand 109a an die Unterseite 202b geschweißt. Der erste Kontaktierungsabschnitt 201 liegt mit seiner Oberseite 201a unmittelbar an der zweiten Metallscheibe 115 an und ist mit dieser durch eine Verschweißung verbunden.

Die Zelle 100 weist beispielsweise eine Höhe im Bereich von 60 mm bis 10 mm auf, ihr Durchmesser liegt bevorzugt im Bereich von 20 mm bis 50 mm. Der Gehäusebecher 101 weist in dem Zentralabschnitt 101b üblicherweise eine Wandstärke im Bereich von 0,1 mm bis 0,3 mm auf. Der radial nach innen umgebogene Öffnungsrand 101d des Gehäusebechers 101 ist um einen Faktor im Bereich von 1,5 bis 2 dicker ausgebildet als der Gehäusebecher 101 in dem Zentralabschnitt 101b. Er umfasst eine erste, innenliegende Seite, die in unmittelbarem Kontakt mit der Dichtung 103 steht, und eine zweite, von der Dichtung 103 abgewandte Seite. Die zweite Seite umfasst die kreisringförmige ebene Fläche 101p. Diese bildet einen Kreisring mit einer bevorzugten Kreisringbreite im Bereich von 0,8 mm bis 3 mm auf und schließt mit der Wand des Gehäusebechers 101 in dem Zentralabschnitt 101b einen Winkel von 90° ein. Zwischen dem höchsten und dem tiefsten Punkt der kreisringförmigen ebenen Fläche bestehen maximal 0,08 mm Höhenunterschied.

## Patentansprüche

1. Kontaktblechteil (200), umfassend
a. einen ersten Kontaktierungsabschnitt (201) mit einer Oberseite (201a) und einer Unterseite (201b), der zur Kontaktierung mit einem ersten Bauteil eines Energiespeicherelements vorgesehen ist, und
b. einen zweiten Kontaktierungsabschnitt (202) mit einer Oberseite (202a) und einer Unterseite (202b), der zur Kontaktierung mit einem zweiten Bauteil eines Energiespeicherelements vorgesehen ist, und
c. zwischen dem ersten Kontaktierungsabschnitt (201) und dem zweiten Kontaktierungsabschnitt (202) einen Verbindungsabschnitt (203) mit einer Oberseite (203a) und einer Unterseite (203b), wobei die Oberseite (203a) des Verbindungsabschnitts (203) der Unterseite (201b) des ersten Kontaktierungsabschnitts (201) und die Unterseite (203b) der Verbindungsabschnitts (203) der Oberseite (202a) des zweiten Kontaktierungsabschnitts (202) zugewandt ist, und
wobei
d. der erste Kontaktierungsabschnitt (201) und der Verbindungsabschnitt (203) über eine erste Biegezone (204), in der das Kontaktblechteil (200) entlang mindestens einer Biegelinie umgebogen ist, miteinander verbunden sind, und
e. der zweite Kontaktierungsabschnitt (202) und der Verbindungsabschnitt (203) über eine zweite Biegezone (205), in der das Kontaktblechteil (200) entlang mindestens einer Biegelinie umgebogen ist, miteinander verbunden sind,
wobei
f. der zweite Kontaktierungsabschnitt (202) eine Ausnehmung (206) oder eine Durchbrechung (207) aufweist, welche eine Aufnahme für die erste Biegezone (204) bildet.

2. Kontaktblechteil nach Anspruch 1 mit mindestens einem der folgenden zusätzlichen Merkmale:
a. Der erste Kontaktierungsabschnitt (201) ist parallel zum zweiten Kontaktierungsabschnitt (202) ausgerichtet.
b. Der Verbindungsabschnitt (203) ist parallel zum ersten Kontaktierungsabschnitt (201) und/oder zum zweiten Kontaktierungsabschnitt (202) ausgerichtet.
c. Der Verbindungsabschnitt (203) schließt mit dem ersten Kontaktierungsabschnitt (201) und/oder dem zweiten Kontaktierungsabschnitt (202) einen Winkel im Bereich von - 10° bis + 30° ein.

3. Kontaktblechteil nach Anspruch 1 oder nach Anspruch 2 mit mindestens einem der folgenden zusätzlichen Merkmale:
a. Das Kontaktblechteil (200) weist im ersten Kontaktierungsabschnitt (201) und im zweiten Kontaktierungsabschnitt (202) und im Verbindungsabschnitt (203) jeweils eine gleichmäßige Dicke auf.
b. Das Kontaktblechteil (200) weist im Verbindungsabschnitt (203) die gleiche Dicke wie im ersten Kontaktierungsabschnitt (201) und/oder im zweiten Kontaktierungsabschnitt (202) auf.

4. Kontaktblechteil nach einem der vorhergehenden Ansprüche mit dem folgenden zusätzlichen Merkmal:
a. Das Kontaktblechteil (200) weist im zweiten Kontaktierungsabschnitt (202) mindestens eine Sicke (208) auf, die auf der Oberseite (202a) des zweiten Kontaktierungsabschnitts (202) als Vertiefung und auf der Unterseite (202b) als Erhöhung auftritt.

5. Kontaktblechteil nach einem der vorhergehenden Ansprüche mit mindestens einem der folgenden zusätzlichen Merkmale:
a. Das Kontaktblechteil (200) umfasst im ersten Kontaktierungsabschnitt (201) ausschließlich Bereiche, die sich in einer ebenen Schicht erstrecken.
b. Das Kontaktblechteil (200) umfasst im zweiten Kontaktierungsabschnitt (202) ausschließlich Bereiche, die sich in einer ebenen Schicht erstrecken.
c. Das Kontaktblechteil (200) umfasst im Verbindungsabschnitt (203) ausschließlich Bereiche, die sich in einer ebenen Schicht erstrecken.

6. Kontaktblechteil nach einem der Ansprüche 1 bis 4 mit mindestens einem der folgenden zusätzlichen Merkmale:
a. Das Kontaktblechteil (200) umfasst im ersten Kontaktierungsabschnitt (201) ausschließlich Bereiche, die sich in einer ebenen Schicht erstrecken.
b. Das Kontaktblechteil (200) umfasst im zweiten Kontaktierungsabschnitt (202) einen ersten Bereich, der sich in einer ebenen Schicht erstreckt, und mindestens einen zweiten Bereich, der sich nicht in dieser ebenen Schicht erstreckt.
c. Das Kontaktblechteil (200) umfasst im Verbindungsabschnitt (203) ausschließlich Bereiche, die sich in einer ebenen Schicht erstrecken.

7. Kontaktblechteil nach einem der vorhergehenden Ansprüche mit mindestens einem der folgenden zusätzlichen Merkmale:
a. Der erste Kontaktierungsabschnitt (201) ist ein endständiger Kontaktierungsabschnitt.
b. Der zweite Kontaktierungsabschnitt (202) ist ein endständiger Kontaktierungsabschnitt.

8. Kontaktblechteil nach einem der vorhergehenden Ansprüche mit dem folgenden zusätzlichen Merkmal:
a. Der erste Kontaktierungsabschnitt (201) und der zweite Kontaktierungsabschnitt (202) und der Verbindungsabschnitt (203) weisen jeweils eine Durchbrechung (209) auf, welche in Richtung senkrecht zum zweiten Kontaktierungsabschnitt (202) miteinander überlappen und einen Durchlass durch die Abschnitte des Kontaktblechteils (200) bilden.

9. Energiespeicherelement (100), umfassend ein Kontaktblechteil (200) nach einem der vorhergehenden Ansprüche.

10. Energiespeicherelement nach Anspruch 9 mit mindestens einem der folgenden zusätzlichen Merkmale:
a. Das Energiespeicherelement (100) umfasst einen Elektroden-Separator-Verbund (104) mit der Sequenz Anode (105) / Separator (116) / Kathode (108).
b. Das Energiespeicherelement (100) umfasst ein luft- und flüssigkeitsdicht verschlossenes Gehäuse, in dem der Elektroden-Separator-Verbund (104) angeordnet ist.
c. Der Elektroden-Separator-Verbund (104) ist über das Kontaktblechteil (200) elektrisch mit einem Teil des Gehäuses oder einem durch das Gehäuse geführten elektrischen Pol verbunden.

11. Energiespeicherelement nach Anspruch 9 oder Anspruch 10 mit mindestens einem der folgenden zusätzlichen Merkmale:
a. Der Elektroden-Separator-Verbund (104) liegt in Form eines zylindrischen Wickels mit einer ersten endständigen Stirnseite (104a) und einer zweiten endständigen Stirnseite (104b) und einem dazwischen liegenden Wickelmantel (104c) vor.
b. Die Anode (105) des Elektroden-Separator-Verbunds (104) umfasst einen Anodenstromkollektor (106), der einen ersten Längsrand (106a) und einen dazu parallelen zweiten Längsrand aufweist.
c. Der Anodenstromkollektor (106) umfasst einen Hauptbereich, der mit einer Schicht (107) aus negativem Elektrodenmaterial beladen ist, sowie einen freien Randstreifen, der sich entlang seines ersten Längsrands (106a) erstreckt und der nicht mit dem negativen Elektrodenmaterial beladen ist.
d. Die Kathode (108) des Elektroden-Separator-Verbunds (104) umfasst einen Kathodenstromkollektor (109), der einen ersten Längsrand (109a) und einen dazu parallelen zweiten Längsrand aufweist.
e. Der Kathodenstromkollektor (109) umfasst einen Hauptbereich, der mit einer Schicht aus positivem Elektrodenmaterial (110) beladen ist, sowie einen freien Randstreifen, der sich entlang seines ersten Längsrands (109a) erstreckt und der nicht mit dem Elektrodenmaterial (110) beladen ist.
f. Die Anode (105) und die Kathode (108) sind innerhalb des Elektroden-Separator-Verbunds (104) derart angeordnet, dass der erste Längsrand (106a) des Anodenstromkollektors (106) aus der ersten endständigen Stirnseite (104a) und der erste Längsrand (109a) des Kathodenstromkollektors (108) aus der zweiten endständigen Stirnseite (104b) des Elektroden-Separator-Verbunds (104) austritt.

12. Energiespeicherelement nach Anspruch 11 mit mindestens einem der folgenden zusätzlichen Merkmale:
a. Das Gehäuse umfasst einen metallischen Gehäusebecher (101) mit einer endständigen kreisförmigen Öffnung und eine Deckelbaugruppe (102) mit einem kreisförmigen Rand (102a), welche die kreisförmige Öffnung verschließt.
b. Die Oberseite (201a) des ersten Kontaktierungsabschnitts (201) ist an der Deckelbaugruppe (102) fixiert.
c. Die Unterseite (202b) des zweiten Kontaktierungsabschnitts (202) ist durch Verschweißung an einem aus einer der Stirnseiten (104a oder 104b) des Elektroden-Separator-Verbunds (104) austretenden Längsrand (106a oder 109a) eines der Stromkollektoren (106, 109) fixiert.

13. Energiespeicherelement nach Anspruch 12 mit mindestens einem der folgenden zusätzlichen Merkmale:
a. Die Deckelbaugruppe (102) umfasst eine Polkappe (117) mit einem kreisförmigen Rand.
b. Die Deckelbaugruppe (102) umfasst eine erste Metallscheibe (113) mit einem kreisförmigen Rand.
c. Die Deckelbaugruppe (102) umfasst eine zweite Metallscheibe (115) mit einem kreisförmigen Rand.
d. Die Deckelbaugruppe (102) umfasst ringförmige Dichtung (103).
e. Die Deckelbaugruppe (102) umfasst einen ringförmigen Isolator (116).
f. Die erste Metallscheibe (113) ist zwischen der Polkappe (117) und der zweiten Metallscheibe (115) angeordnet.
g. Der ringförmige Isolator (116) isoliert die erste Metallscheibe (113) und die zweite Metallscheibe (115) elektrisch gegeneinander.
h. Die erste Metallscheibe (113) steht in unmittelbarem Kontakt zur Polkappe (117).
i. Die ringförmige Dichtung (103) ist auf den kreisförmigen Rand der Polkappe (117) und/oder der ersten Metallscheibe (113) aufgezogen.
j. Die Oberseite (201a) des ersten Kontaktierungsabschnitts (201) ist an die zweite Metallscheibe (115) geschweißt.
